# EUROPÄISCHE PATENTSCHRIFT

(11) **EP 0 561 273 B1**
(45) Veröffentlichungstag und Bekanntmachung des Hinweises auf die Patenterteilung: **05.06.1996**
(21) Anmeldenummer: 93103912.7
(22) Anmeldetag: 11.03.1993
(51) Int. Cl.: C04B 35/00

(54) **Vergiessbare Formmassen**
Castable shaping mass
Masse à former coulable

(30) Priorität: 17.03.1992 DE 4208476
(43) Veröffentlichungstag der Anmeldung: 22.09.1993
(73) Patentinhaber: BASF Aktiengesellschaft, D-67063 Ludwigshafen (DE)
(72) Erfinder: ter Maat, Johan Herman Hendrik, W-6800 Mannheim 1 (DE); Sterzel, Hans-Josef, Dr., W-6701 Dannstadt-Schauernheim (DE); Rieger, Jens, Dr., W-6700 Ludwigshafen (DE); Klaerner, Peter, Dr., W-6719 Battenberg (DE)

(56) Entgegenhaltungen:
- EP-A- 0 531 819
- DE-A- 3 737 638
- DATABASE WPIL Week 8831, Derwent Publications Ltd., London, GB; AN 88-216307 & JP-A-63 151689
- DATABASE WPIL Week 8619, Derwent Publications Ltd., London, GB; AN 86-121321 & JP-A-61058853
- DATABASE WPIL Week 9120, Derwent Publications Ltd., London, GB; AN 91-146182 & JP-A-3 084009

## Beschreibung

Die Erfindung betrifft vergießbare, versinterbare Pulver enthaltende Formmassen für die Herstellung von Formkörpern und Verfahren zur Herstellung von Formkörpern und Sinterkörpern unter Verwendung dieser Formmassen.

Komplex gestaltete Sinterkörper werden, ausgehend von versinterbaren Pulvern, bevorzugt über ein Spritzgießverfahren hergestellt. Die Pulver-Spritzgußtechnik ermöglicht eine endkonturnahe Fertigung und eignet sich hervorragend für die Automatisierung.

Beim üblichen Spritzguß vermischt man das Pulver mit einem thermoplastischen Polymer zu einem hochgefüllten Granulat (40 - 65 Vol.-% Pulver). Das Granulat wird bei der Verarbeitung in einer Schneckenspritzgießmaschine wieder aufgeschmolzen und bei 10-2000 bar in eine temperierte Form eingespritzt. Das erstarrte "grüne" Formteil wird der Form entnommen oder ausgeworfen und muß noch einer Entbinderung unterzogen werden. Das endkonturnahe Fertigteil wird durch Sintern erhalten.

Nur in den frühen Anfängen hat man sich beim Pulverspritzguß mit üblichen Thermoplasten wie z.B. Polystyrol, Polypropylen und Polyethylen beschäftigt. Nachteilig war dabei die Notwendigkeit, die pyrolytische Entbinderung extrem langsam auszuführen, damit die gasförmigen Pyrolysefragmente des Polymeren keinen so hohen Druck im Inneren des Teils aufbauen konnten, daß Blasen und Risse gebildet wurden, sondern ohne Schaden anzurichten aus dem Grünteil entweichen konnten. Dies führte dazu, daß bei Formteilen mit 4 - 5 mm Wandstärke eine Entbinderzyklus von 1 Woche notwendig war.

Diese erheblichen Probleme bei der pyrolytischen Entfernung eines thermoplastischen, hochmolekularen Binders wurden für Polyoxymethylen auf elegante Weise gelöst, indem die Entbinderung als katalysierte Depolymerisation zu dem gasförmigen Monomer ausgeführt wird. Durch die Verwendung eines Katalysators kann die Entbinderung auf kontrollierte Weise bei Temperaturen unterhalb des Erweichungspunktes des Binders vorgenommen werden (DE 39 26 869 A1).

Obwohl sich diese Technologie hervorragend für den Spritzguß von sowohl dicken als auch dünnen oder langen Teilen eignet, sind doch einige wenige Nachteile verblieben. Der relativ viskose Binder und der damit verbundene hohe Spritzdruck bedingen einen teueren Verschleißschutz sämtlicher mit der hochgefüllten Schmelze in Berührung kommenden Oberflächen der Spritzgießmaschine. Weiterhin ist die Entbinderung zwar schnell (ein Formteil von 4 - 5 mm ist in 3 Stunden entbindert), sie stößt jedoch auf bestimmte Grenzen, was die Dicke des Teiles betrifft. Dadurch, daß Diffusionslimitierung der Gase durch die bereits entbinderte, poröse Oberflächenschicht eine immer größere Rolle spielt, sind Teile mit einer Wandstärke über 20 mm kaum mehr in einer annehmbaren Zeit zu entbindern. So dauert die Entbinderung eines 50 mm dicken Teils bereits 20 Stunden.

Bei den üblichen thermoplastischen Bindern hat man die benötigte Entbinderzeit verkürzen können, in dem man den Anteil flüchtiger, niedermolekularer Binderkomponenten ständig größer machte. Durch die Verdampfung der niedrigschmelzenden Wachse oder Öle wurde eine offene Porosität geschaffen, durch die die Pyrolyseprodukte des hochmolekularen, festigkeitsspendenen Polymeren entweichen konnten (US 4 404 166). So konnte man ein Teil mit 4 - 5 mm Wandstärke nunmehr in etwa 12 Stunden entbindern. Dieser hohe Anteil niedermolekularer Komponenten hat als zusätzlicher Vorteil zufolge, daß die Viskosität erheblich herabgesetzt wird. Dadurch kann mit Spritzdrucken unter 100 bar, gelegentlich auch unter 10 bar, gearbeitet werden und der Verschleiß ist bedeutend geringer. Dafür wurden neue Nachteile festgestellt: Das Grünteil ist sehr weich, so daß das Formteil nicht ausgeworfen werden kann. Das Teil muß vorsichtig hantiert werden und es benötigt während der Entbinderung Unterstützung, z.B. durch eine Pulverschüttung (DE 36 30 690 A1).

Aus der DE 36 30 690 A1 sind Formmassen bekannt, die Polyethylen, ein Mineralöl und versinterbare Pulver enthalten. Polyethylen enthält zwar üblicherweise kristalline Anteile, in dieser Druckschrift ist jedoch bezüglich der Kristallinität von Polymeren und den daraus in Verbindung mit einem Lösungsmittel resultierenden vorteilhaften Mischungen nichts offenbart.

Polypropylen/Öl-Mischungen werden von Hens et a. (PMI, Vol. 23, NO. 1, 1991, S. 15-21) beschrieben. Da isotaktisches Polypropylen stark schrumpft beim Abkühlen, wird sogar vom Einsatz dieses Polymeren abgeraten (siehe z.B. J.G. Zhang et al., Ind. Ceram. Vol. 9 (2), 1989, p 76).

Eine Alternative zu den thermoplastischen Bindern wird vom Gelcasting geboten. Hier sorgt die Gelierung einer Polymerlösung durch Temperaturänderung oder durch eine in-situ-Polymerisation gelöster Monomeren für die Verfestigung in der Form. Beispiele für die Gelierung einer Lösung sind in der US 4 113 480 genannt. Einem praktischen Einsatz ist bisher die schlechte Grünfestigkeit und das Kleben an der Form im Wege gestanden. Die in-situ-Polymerisation kann zwar eine bessere Grünfestigkeit ergeben, aber ein unüberwindlicher Nachteil ist, daß man diese Massen nicht wiederverwenden kann. Die Gelierung ist irreversibel. Vor allem bei kleinen Teilen ist der Verlust des Angusses ein wichtiger Kostenfaktor.

Eine weitere Möglichkeit bietet der Gefrierspritzguß. Diese Alternative wird mit einer niedrigviskosen, lösungsmittelbasierten Suspension ausgeführt. In der kalten Form wird das Lösungsmittel eingefroren und anschließend mittels Sublimation entfernt. Hierbei kann es sich um Wasser handeln (WO 88/07902), aber auch mit nichtwäßrigen Lösungsmitteln wird das Verfahren betrieben (WO 88/07903). Vorteilhaft sind die niedrige Viskosität und damit der geringe Verschleiß, die gute Grünfestigkeit des gefrorenen Formkörpers und die schonende Entfernung des verfestigten Lösungsmittels. Es werden jedoch meist unpraktisch tiefe Formtemperaturen gebraucht (-78°C), um die erhebliche Schmelzwärme des Lösungsmittels so schnell aus dem Formkörper abzuführen, daß sich keine größeren Kristallite bilden. Bei dickeren Teilen werden demzufolge immer Probleme durch die Ausbildung großer Kristalle im Inneren der Teile auftreten. Auch die Gefriertrocknung wird durch den niedrigen Dampfdruck des festen Lösungsmittels gezwungenermaßen lange dauern.

Der vorliegenden Erfindung lag die Aufgabe zugrunde, sich durch Abkühlen schnell verfestigende, niedrigviskose vergießbare Formmassen zur Verfügung zu stellen, die ohne Haftprobleme der Form zu entnehmen sind und eine zum Hantieren ausreichende Grünfestigkeit besitzen. Außerdem soll die Entfernung der plastifizierenden Phase schnell und ohne Rißbildung auch aus dicken Teilen vorgenommen werden können.

Diese Aufgabe wird gelöst durch vergießbare Formmassen für die Herstellung von Formkörpern, enthaltend, bezogen auf die Gesamtmasse,
A) 30 - 70 Vol.-% eines versinterbaren Pulvers,
B) 1 - 55 Vol.-% eines kristallinen oder teilkristallinen Polymers oder Copolymers mit einer Kristallinität von mindestens 10 % und einem Molekulargewicht von bis zu 200 000 und
C) 10 - 55 Vol.-% eines Lösungsmittels für das Polymere oder Copolymere,
wobei Formmassen, die Polyethylenhomopolymere und ein Mineralöl enthalten, ausgenommen sind.

Bevorzugt ist die Komponente A) mit 40-65 Vol.-%, die Komponente B) mit 10-35 Vol.-% und die Komponente C) mit 20-35 Vol.-% in der Formmasse enthalten, die auch noch bis zu 10 Vol.-% eines Dispergiermittels enthalten kann.

Überraschenderweise zeigt sich, daß die erfindungsgemäßen Binder aus dem teilkristallinen Polymer und dem Lösungsmittel für dieses Polymer dazu führen, daß das Entfernen des Lösungsmittels ohne aufwendige Temperaturprogramme und lange Ausheizzeiten möglich ist.

Die plastifizierende Phase der erfindungsgemäßen Formmassen wird durch die Lösung des kristallinen oder teilkristallinen Polymers oder Copolymers gebildet.

Durch Abkühlen fällt das Polymer aus der Lösung in einen festen teilkristallinen Zustand aus. Dadurch entsteht eine Verfestigung der Suspension; die Temperatur, bei der diese Verfestigung stattfindet, wird vom Polymer und vom Lösungsmittel bestimmt. Nach der Verfestigung kann das Lösungsmittel dem Formteil entzogen werden. Wenn die Trocknung (üblicherweise Vakuumtrocknung) nun unterhalb der Verfestigungstemperatur vorgenommen wird, bleibt der kristalline Anteil des Polymeren fest, bindet somit weiterhin die Pulverteilchen, und es findet keine Rißbildung statt.

Nach der Trocknung kann das teilkristalline Polymer und ggf. der Dispergator bei 150° bis 600°C pyrolysiert und das Formteil bei den für den Werkstoff üblichen Bedingungen gesintert werden.

Amorphe Polymere sind ungeeignet, weil sie in einen gel-artigen Zustand ausfallen und deswegen eine sehr viel kleinere bindende Wirkung haben. Dadurch ist die Grünfestigkeit des Formlings sehr niedrig, das Formteil klebt und man kann eine rißfreie Trocknung nur sehr langsam (üblich sind 1 - 2 Tage) durchführen.

Als Komponente B sind prinzipiell alle Polymere mit der erfindungsgemäßen Kristallinität geeignet. Polyolefine, z.B. Polyethylen, isotaktisches Polypropylen, Poly(4-methyl-1-penten), Poly(1-buten); Polystyrole (isotaktisch und syndiotaktisch); weiterhin Polykylenoxide, wie Polyoxymethylen, Polyethylenoxid, Polypropylenoxid; Polyester, wie Polyethylenadipat, Polytetramethylenadipat, Polyethylenazelat, Polyethylensebacat, Polydecamethylenadipat, Polydecamethylensebacat, Poly(alpha,alpha-dimethylpropiolacton), und Polyamide, wie Polyamid-6, Polyamid-6,6, Polyamid-7, Polyamid-7,7, Polyamid-8,8, Polyamid-6,10, Polyamid-9,9, Polyamid-10,9, Polyamid-10,10 sowie deren Copolyamide. Auch verträgliche Mischungen dieser Polymeren sind verwendbar. Es ist verständlich, daß die Polymere, die eine hohe Kristallinität aufweisen, billig verfügbar sind und rückstandsfrei pyrolysierbar sind, sich am besten eignen. Deswegen empfiehlt sich der Einsatz von Polyethylen, isotaktischem Polypropylen, Polyoxymethylen, Polyethylenoxid, Polypropylenoxid, Polyamid-6 und Polyamid-6,6 und Copolyamid-6/6,6 besonders. Ebenfalls empfehlenswert ist der Einsatz eines niedermolekularen teilkristallinen Polymeren. Üblicherweise wird die Kristallinität höher durch die bessere Beweglichkeit der kleineren Polymermoleküle; außerdem wird die Viskosität der Lösung herabgesetzt. Selbstverständlich soll das Molgewicht nicht so klein sein, daß die Kristallinität bei Raumtemperatur verloren geht.

Die untere Grenze der Kristallinität liegt bei 10 %; unterhalb dieses kristallinen Anteils wird keine ausreichende Verfestigung mehr festgestellt. Auch werden bei einem zunehmenden amorphen Anteil die Haftprobleme des verfestigten Formteils an der Formwand zunehmend größer. In der Praxis hat sich eine Kristallinität von mindestens 15 %, bevorzugt mindestens 30 % als vorteilhaft herausgestellt. Selbstverständlich sind auch Copolymere mit Blöcken eines teilkristallinen Polymeren als Verfestiger geeignet; dies ist gelegentlich vorteilhaft, um eine Löslichkeitsvermittlung eines teilkristallinen Polymeren in einem gewünschten Nicht-Lösungsmitte zu erreichen.

Die erfindungsgemäßen Polymere oder Copolymere weisen ein Molekulargewicht (Zahlenmittel Mₙ) von bis zu 200 000 auf. Die untere Grenze für das Molekulargeiwcht ist zweckmäßig 100, d.h. auch oligomere Verbindungen können eingesetzt werden. Bevorzugt sind Molekulargewichte von 200 bis 100 000.

Das für die Verfestigung sorgende Polymer sollte in dem Lösungsmittel in einer Konzentration von nicht weniger als 10 Vol.-% der Summe dieser beiden Komponente vorliegen. Der optimale Bereich hängt ab von der Kristallinität und dem Molgewicht des Polymeren; üblicherweise ist eine 20 - 50 Vol.-% Lösung des teilkristallinen Polymeren ausreichend für eine effektive Verfestigung. Eine konzentrierte Lösung bewirkt dabei selbstverständlich eine bessere Grünfestigkeit des Formkörpers. Dabei muß man jedoch zur Verfestigung mehr Kristallisierungswärme aus dem Formkörper entfernen und dies führt zu längeren Taktzeiten bei der Verarbeitung. Ein weiterer Nachteil ist die zunehmende Viskosität der Suspension.

Als Lösungsmittel kommen aromatische und aliphatische Kohlenwasserstoffe, insbesondere Alkane und Cycloalkane, Ether, Alkohole, Ketone, Ester, Amine, Amide und Wasser sowie deren Mischungen in Betracht.

Die Wahl des Lösungsmittels richtet sich primär nach dem verwendeten teilkristallinen Polymer. Mit einigen Vorversuchen kann die Kompatibilität durch Aufwärmen der beiden Komponenten überprüft werden. Beim Abkühlen der Lösung kann festgestellt werden, ob das teilkristalline Polymer ausfällt. Die Fällungstemperatur kann als Richtwert für die Verfestigungstemperatur der Formmasse genommen werden. Weitere Anforderungen sind, daß das Lösungsmittel bei der Verarbeitungstemperatur nicht zu flüchtig ist, so daß eine Eindickung und Verkrustung der Formmasse während der Verarbeitung auftreten würde, und daß das Lösungsmittel beim Abkühlen in der Form in dem flüssigen Zustand bleibt. Andererseits muß das Lösungsmittel unterhalb der Verfestigungstemperatur der Formmasse noch einen zur Vakuumtrocknung ausreichenden Dampfdruck besitzen. Demzufolge ist die Wahl eines Lösungsmittels mit einem Schmelzpunkt mehr als 20°C unterhalb der Verfestigungstemperatur der Formmasse und einem Siedepunkt mindestens 40°C oberhalb der Verfestigungstemperatur wünschenswert.

Für unpolare Polymere kommen unpolare Lösungsmittel mit Schmelzpunkten unter -40°C in Betracht, insbesondere Alkane bzw. Cycloalkane, wie z.B. Hexan, Cyclohexan, n-Octan und iso-Octan, für polare Polymere kommen polare Lösungsmittel wie Ether, Alkohole, Ketone, Ester, Amine und Amide, z.B. Diglyme, Ethylenglykol, Butylacetat und auch Wasser sowie deren Mischungen, in Frage.

Die erfindungsgemäßen Formmassen enthalten 30 bis 70 Vol.-%, vorzugsweise 40 bis 65 Vol.-% versinterbare Pulver. Unter versinterbaren Pulvern werden Polymerpulver, z.B. Polyimid, Polytetrafluorethylen oder oxidische Keramikpulver, z.B. Al₂O₃, ZrO₂, Aluminiumsilikate, SiO₂, Fe₂O₃, BaTiO₃ oder auch nichtoxidische Pulver wie SiC, Si₃N₄, WC sowie auch Metallpulver wie Fe, Si, Nickel, bevorzugt mit Korngrößen von 0,1 bis 50 µm verstanden. Selbstverständlich können auch Mischungen dieser Substanzen eingesetzt werden. Ein Teil der versinterbaren Pulver, vorzugsweise nicht mehr als 30 Vol.-% des Gesamtpulvers, insbesondere 5 bis 20 Vol.-%, kann durch anorganische Fasern oder Whisker ersetzt werden, z.B. aus Al₂O₃, SiC oder Kohlenstoff.

Bei Pulvern < 10 µm ist es oft notwendig, ein Dispergierhilfsmittel in Mengen bis zu 10 Vol.-%, bevorzugt 5 Vol.-% zur Gewährleistung der homogenen Verteilung der Pulver und damit auch der Fließfähigkeit der Suspension einzusetzen. Geeignet sind grundsätzlich alle üblichen Dispergierhilfsmittel, sie müssen jedoch im Versuch dem Pulver und dem Lösungsmittel angepaßt werden. Beispielhaft seien Stearinsäure, Polyhydroxystearinsäure, Fettalkohole, Fettalkoholsulfonate und Blockcopolymere aus Ethylen- und Propylenoxid genannt.

Zusätzlich können die erfindungsgemäßen gießfähigen Formmassen auch noch übliche Zusatzstoffe und Verarbeitungshilfsmittel wie z.B. Entschäumer oder Formtrennhilfsmittel enthalten.

Die Herstellung der erfindungsgemäßen vergießbaren Formmassen erfolgt auf bekannte Weise. Im kleinen Maßstab hat sich die Behandlung mit Ultraschallwellen als schnelle und praktische Methode bewährt. Die Lösungsmittel und ggf. Dispergierhilfsmittel werden in einem Glaskolben vorgelegt. Der Kolben ist in ein Ultraschallbad eingetaucht. Das Pulver wird portionsweise zugeführt, bis ein hoher Gehalt an Pulver bei guter Fließfähigkeit erreicht ist. Dann wird die Suspension aufgewärmt und das teilkristalline Polymer wird unter ständigem Rühren gelöst. Auch kann das teilkristalline Polymer, wenn die Verfestigungstemperatur nicht zu hoch ist, vor der Beschallung im Lösungsmittel in der Wärme gelöst werden.

Anwendungsnaher ist die Vermahlung, z.B. in einer Rührwerkskugelmühle; üblicherweise führt diese Behandlung zu höheren Dichten des gesinterten Formkörpers. Dazu wird eine relativ hohe Menge eines Lösungsmittels genommen; üblicherweise 60-80 Vol.-% des Mahlansatzes. In dem Lösungsmittel wild das Dispergierhilfsmittel vorgelegt, dann wird das Pulver zugegeben und gemahlen. Zum Erreichen des erwünschten Volumenfüllgrades an Pulver (z.B. 40 - 65 Vol.-%) muß ein Teil des Lösungsmittels wieder entfernt werden, z.B. durch Destillation in einem Rührkessel. Während dieses Vorganges kann das teilkristalline Polymer unter Rühren gelöst werden.

Als Alternative bietet sich die vollständige Trocknung der gemahlenen Suspension in z.B einem Sprüh- oder Schaufeltrockner an. Die gewünschten Mengen Lösungsmittel und teilkristallines Polymer werden in einem Mischaggregat, z.B. in einem Kneter, aufgewärmt und homogen gelöst. Das aus der Trocknung erhaltene, mit Dispergator beschichtete Pulver wird dann portionsweise in dem beheizten Kneter mit der Lösung gemischt bis zum gewünschten Füllgrad.

Es ist auch möglich, das getrocknete Pulver mit der gewünschten Menge an teilkristallinem Polymer trocken zu mischen, diese Mischung in einem Rührwerk vorzulegen und unter Rühren des Pulvers bei Raumtemperatur das Lösungsmittel in das Pulver einzuführen, wobei die Pulvermasse rieselfähig bleibt. Zur Verarbeitung wird die Mischung aufgeschmolzen und entgast.

Für etwas gröbere Pulver, z.B. Metallpulver oder PTFE-Pulver, kann man auf den Mahlschritt verzichten und das Pulver in einem beheizten Kneter in die gelösten organischen Komponenten einarbeiten.

Die so erhaltene, fließfähige, hochgefüllte Masse wird jetzt der Formgebung zugeführt. Die Formgebung kann durch Ausgießen der warmen Suspension in eine gekühlte Form ausgeführt werden. Produktionsnaher ist die Verarbeitung in einer Spritzgußmaschine. Zu diesem Zweck können die üblichen Schnecken- und Kolbenspritzgußmaschinen eingesetzt werden; eine Verarbeitung in einem langsam gerührten Behälter mit Bodenablaß unter Druckbeaufschlagung ist durch die niedrige Viskosität der erfindungsgemäßen Suspensionen auch praktizierbar. Die Verarbeitung ist üblicherweise bei einem Überdruck von 0,01 - 10 MPa, vorzugsweise 0,1 - 5 MPA ausführbar. Die Verarbeitungstemperatur sollte 0 - 40°C, bevorzugt 10 - 30°C über der Verfestigungstemperatur der Suspension liegen. Die Formtemperatur ist zweckmäßig auf einer Temperatur 0 - 100°C, bevorzugt 5 - 30°C unterhalb der Verfestigungstemperatur zu halten. Dabei wird die Formmasse auf eine Temperatur unterhalb ihrer Verfestigungstemperatur abgekühlt. Die Formtemperatur soll nicht so tief sein, daß das Lösungsmittel gefriert; in diesem Fall muß sehr viel mehr Wärme aus dem Formkörper entfernt werden.

Bei entsprechender Wahl der Verfahrensparameter (Dispergatormenge, Dispergatortyp, Menge des teilkristallinen Polymeren, Lösungsmitteltyp, Füllgrad der Suspension, Verarbeitungs- und Formtemperatur, Kühlzeit) ist das Formteil der Form ohne Schwierigkeiten zu entnehmen.

Aus dem so erhaltenen Grünteil wird zunächst das Lösungsmittel, bevorzugt durch Trocknen bei vermindertem Druck oder Abführen des Lösungsmittels durch ein Inertgas oder Luft, bei Temperaturen unterhalb der Verfestigungstemperatur der Formmasse entfernt. Das Lösungsmittel wird auskondensiert und kann wiederverwendet werden. In der Praxis hat sich ein Vakuum von 1 mbar als ausreichend erwiesen. Im kleinen Maßstab kann die Vakuumtrocknung bei Raumtemperatur in einem normalen Vakuumtrockenschrank durchgeführt werden; für niedrigere Temperaturen wurde ein doppelwandiges Glasgefäß mit einem Kryostaten thermostatisiert und evakuiert. Die Trockenzeit liegt üblicherweise zwischen 0,5 und 4 Stunden.

Das Lösungsmittel kann auch durch Behandlung mit anderen Lösungsmitteln entfernt werden.

Das zurückbleibende, teilkristalline Polymer und das verwendete Dispergierhilfsmittel können z.B. in einem Vakuumofen bei 150 bis 500°C rasch und ohne Rißbildung entfernt werden; eine pyrolytische Entfernung in Stickstoff oder Luft bei 250 - 600°C ist eine andere Möglichkeit.

Der resultierende Weißkörper kann dann direkt bei den für das jeweilige Pulver üblichen Tempertuen in den üblichen Atmosphären gesintert werden.

Die Verarbeitung der erfindungsgemäßen Formmassen zu gesinterten Formteilen hat bisher nicht erreichbare Vorteile. Eine homogene, gut dispergierte, fließfähige Suspension wird bei niedrigem Druck und bei milder Verarbeitungstemperatur in eine etwa 30 bis 50°C kältere Form eingespritzt und verfestigt. Das relativ geringe Temperaturgefälle, in dem die Verfestigung eintritt, gestattet eine gute Formfüllung und eine Oberflächenanpassung der Suspension an die der Form, welches in Formteilen mit einer hervorragenden Oberflächenqualität resultiert.

Nach der Entformung, die ohne Haftprobleme möglich ist, läßt sich das Lösungsmittel unterhalb der Verfestiungstemperatur schnell und ohne Rißbildung auch aus sehr dicken Formteilen entfernen. Dadurch, daß die Trocknung unterhalb der Verfestigungstemperatur durchgeführt wird, ist auch gewährleistet, daß ein Verzug nicht auftreten kann. Die zurückbleibenden organischen Bestandteile können nun ebenfalls schnell und problemlos ausgetrieben werden. Das Formteil erlangt mit der Sinterbehandlung segne endgültige Gestalt.

Die erfindungsgemäß angegebene Kristallinität kann nach verschiedenen Methoden bestimmt werden, wobei nur Werte, die mit derselben Methode bestimmt wurden, vergleichbar sind. In den vorliegenden Beispielen wurde als Methode zur Charakterisierung der verwendeten teilkristallinen Polymeren die Messung der Schmelzenthalpie einer Probe mittels DSC angewendet. Durch den Vergleich mit den Literaturwerten für das theoretisch 100 % kristalline Polymer kann die fraktionelle Kristallinität abgeschätzt werden. In erster Näherung ist diese Methode auch für die z.B. in den Beispielen 1 und 4 verwendeten, niedermolekularen teilkristallinen Polymere geeignet. Die verwendete Methode besteht aus der Schmelzenthalpiebestimmung im zweiten aufheizenden Lauf (Aufheizrate 20 K/min) nach vorheriger Abkühlung mit 20 K/min aus der Schmelze.

Die Werte für die Schmelzenthalpie kristalliner Polymere sind folgenden Literaturstellen entnommen: Polymer Handbook, J. Brandrup & E.H. Immergut, 3rd Ed. (Wiley, 1989), Macromolecular Physics, B. Wunderlich, Vol. I (Academic, 1973) und Macromolecular Physics, B. Wunderlich, Vol. III (Academic, 1980).

### Beispiel 1

In einem Glaskolben wurde 9,9 g teilkristallines LD-Polyethylenwachs mit einem Schmelzpunkt von 58°C und einer Kristallinität von 27 % (Mₙ ca. 3000, Schmelzwärme 80 J/g) zusammen mit 3,3 g Dispergierhilfsmittel Stearinsäure bei 60°C in 25 ml Decan (Schmelzpunkt: -30°C) gelöst. Zu dieser Lösung wurde unter Beschallung in einem mit 60°C warmen Wasser aufgefüllten Ultraschallbad 330 g Eisenpulver mit einer mittleren Korngröße von 4,1 µm in mehreren Portionen zugegeben. Die dünnflüssige Suspension (Gehalt an versinterbarem Pulver 51,2 Vol.-%, teilkristallinem Polymer 13,8 Vol.-%, Dispergator 4,8 Vol.-%, Lösungsmittel 30,2 Vol.-%; eine Lösung von 31,3 Vol.-% des teilkristallinen Polymeren in Decan) zeigte eine Verfestigungstemperatur von etwa 38°C. Die 60°C warme Suspension wurde in ein mit Polytetrafluorethylen beschichtetes, in zwei Hälften teilbares Becherglas eingegossen und innerhalb einer Stunde auf 6°C abgekühlt. Das entstandene, harte Formteil mit 50 mm Durchmesser und 30 mm Höhe haftete noch leicht, ließ sich aber intakt aus dem Becherglas entfernen. Die Trocknung erfolgte bei Raumtemperatur und bis auf 1 mbar fallendem Druck in 4 Stunden in einem Vakuumtrockenschrank. Das Formteil war rißfrei; es wies jedoch eine sichbare, weiße Oberflächenschicht, eine Ausschwemmung des teilkristallinen Polymeren, auf.

### Beispiel 2

Es wurde eine Suspension wie in Beispiel 1 hergestellt, jedoch wurden 25 ml n-Octan (Schmelzpunkt: -57°C) verwendet. Die Verfestigungstemperatur der Suspension war 44°C. Das gegossene und auf 6°C abgekühlte Formteil haftete nicht am Becherglas. Nach der Vakuumtrocknung, die wie in Beispiel 1 ausgeführt wurde, war nur noch eine sehr dünne, kaum sichbare Wachsschicht zu sehen. Der Formkörper war rißfrei.

### Beispiel 3

Es wurde eine Suspension wie in Beispiel 1 hergestellt, jedoch mit 25 ml 2,2,4-Trimethylpentan (Schmelzpunkt: -107°C) Die Verfestigungstemperatur war jetzt 48°C. Das gegossene und auf 6°C abgekühlte Formteil haftete nicht am Becherglas. Nach der Vakuumtrocknung, die wie in Beispiel 1 ausgeführt wurde, waren keinerlei Ausschwemmungen zu sehen; die glatte Oberfläche war dunkelgrau wie das Ausgangspulver. Dieses Formteil wurde in einem Rohrofen in wasserstoffhaltiger Atmosphäre mit einer Aufheizrate von 20°C/min auf 300°C gebracht und eine Stunde bei dieser Temperatur zwecks Entfernung des teilkristallinen Polyethylenwachses und der Stearinsäure belassen. Dann wurde mit einer Aufheizgeschwindigkeit von 100°C/min auf 1 200°C geheizt und eine Stunde lang bei dieser Temperatur gehalten. Der erhaltene, rißfreie Sinterkörper hatte eine Dichte von 7,0 g/cm³.

### Beispiel 4

Es wurde ein Ansatz unter Verwendung eines amorphen Polymeren mit einem Ansatz unter Verwendung eines teilkristallinen Polymeren verglichen.
A) Vergleichsbeispiel
   In einem Dissolver, ausgerüstet mit einer PolyethylenRührscheibe und im Behälter 440 ml Al₂O₃-Mahlkugeln (Durchmesser 2 mm), wurde 150 g Al₂O₃-Pulver mit einer mittleren Korngröße von 0,7 µm mit 2,25 g eines Sorbitanoleates als Dispergator und 100 ml n-Octan versetzt und 1 h lang bei 3 000 Umdrehungen pro Minute gemahlen. Nach der Abtrennung der Mahlkugeln wurde das Lösungsmittel n-Octan an einem Rotationsverdampfer abgezogen.
   In einem Glaskolben wurde 1,75 g eines handelsüblichen amorphen Polystyrol-Spritzgußgranulats (Mₙ 90 000) PS 168 N) bei 15°C in 7,7 ml Cumol gelöst. Nach der vollständigen Lösung wurden noch 6,0 ml Decan zugegeben und auf 120°C abgekühlt. Bei dieser Temperatur wurden 89 g des mit Dispergator beschichteten Pulvergranulats eingerührt (Gehalt an versintertem Pulver 56,8 Vol.-%, amorphem Polymer 4,3 Vol.-%, Dispergator 3,8 Vol.-%, Lösungsmittelgemisch 35,1 Vol.-%; eine Lösung von 10,9 Vol.-% des amorphen Polymeren im Gemisch Cumol/Decan). Die Suspension zeigte keinerlei Verfestigung.
B) Erfindungsgemäßes Beispiel
   Es wurde eine Suspension wie in Beispiel 4A hergestellt, jedoch wurde ein teilkristallines Polymer (isotaktisches Polystyrol, Mₙ ca. 50 000, Schmelzpunkt 215°C, Kristallinität nach DSC 28 %) verwendet (Schmelzwärme 27 J/g).
   Die Suspension zeigte jetzt eine Verfestigungstemperatur von 40°C. Die heiße Suspension war gerade noch vergießbar und wurde in ein mit Polytetrafluorethylen beschichtetes, teilbares Becherglas eingegossen und innerhalb einer Stunde auf 6°C abgekühlt. Das entstandene, harte Formteil mit 50 mm Durchmesser und 10 mm Höhe ließ sich aus dem Becherglas entfernen. Die Trocknung erfolgte wie in Beispiel 1. Das Formteil war rißfrei. Anschließend wurde das Formteil in einem Kammerofen mit einer Aufheizrate von 2°C/min auf 450°C gebracht und 2 h bei dieser Temperatur zwecks Entfernung des Dispergators und des teilkristallinen Polymeren belassen. Dann wurde mit einer Aufheizgeschwindigkeit von 10°C/min auf 1 200°C und dann mit einer Aufheizgeschwindigkeit von 2°C/min auf 1650°C erhitzt und dann 4 Stunden bei dieser Temperatur belassen. Das erhaltene Sinterformteil war rißfrei und hatte eine Dichte von 3,80 g/cm³.

### Beispiel 5

In einem Glaskolben wurde 3,3 g von dem Dispergierhilfsmittel Stearinsäure bei 60°C in 25 ml Decan gelöst. Zu dieser Lösung wurde, unter Beschallung in einem mit 60°C warmen Wasser aufgefüllten Ultraschallbad, 330 g eines Eisenpulvers mit einer mittleren Korngröße von 4,1 µm in Portionen zugegeben. Dann wurde die Suspension auf 140°C aufgeheizt und es wurde 9,9 g eines isotaktischen Polypropylens ( Mₙ ca. 50 000, Schmelzpunkt 167°C, Kristallinität 58 %) gelöst. Die dünnflüssige Suspension (Gehalt an versinterbarem Pulver 51,5 Vol.-%, teilkristallinem Polymer 13,4 Vol.-%, Dispergator 4,7 Vol.-%, Lösungsmittel 30,4 Vol.-%; eine Lösung von 30,6 Vol.-% des teilkristallinen Polymeren in Decan) zeigte eine Verfestigungstemperatur von 75°C. Die 120°C warme Suspension wurde in ein mit Polytetrafluorethylen beschichtetetes, teilbares Becherglas eingegossen und innerhalb einer Stunde auf 20°C abgekühlt. Das entstandene Formteil ließ sich leicht entfernen und wurde, wie in Beispiel 1 beschrieben, getrocknet, vom Dispergator und vom tielkristallinen Polymer befreit und zu einem rißfreien Sinterformteil verarbeitet.

### Beispiel 6

Es wurde ein teilkristallines niedermolekulares Polyoxymethylen nach folgender Vorschrift hergestellt:
140 g Paraformaldehyd wurde mit 480 g Essigsäureanhydrid und 0,75 g Natriumacetat unter N₂ bis zum Sieden erhitzt und so unter Rückfluß eine halbe Stunde zwecks Verschließung der metastabilen Endgruppen belassen. Dabei änderte sich das Aussehen von einer milchigen Suspension in eine bläuliche, durchsichtige Lösung. Essigsäure und Essigsäureanhydrid wurden am Wasserstrahlpumpenvakuum abdestilliert. Das bräunliche, wachsartige Rohprodukt zeigte im IR bei 1755 cm⁻¹ die charakteristischen Esterbanden. Das Rohprodukt wurde in 200 ml Butylglykol aufgeschlemmt und auf 130°C erwärmt. Die klare Lösung wurde auf 50°C abgekühlt; das ausgefallene Polymere wurde bei dieser Temperatur abfiltriert und verworfen. Das klare Filtrat wurde weiter auf 20°C abgekühlt und der nun ausgefallene niedermolekulare Teil des Paraformaldehyddiacetat wurde abfiltriert. Der Filterrückstand (9,4 g) wurde getrocknet und als teilkristallines Polymer verwendet. Das niedermolekulare, endgruppenverschlossene Polyoxymethylen hatte einen Schmelzpunkt von 84°C; die Kristallinität nach DSC war 41 % (Mₙ ca. 2000, Schmelzwärme 137 J/g).

In einem Glaskolben wurde 8,47 g des niedermolekularen Polyoxymethylen bei 70°C in 7,46 ml Butylacetat gelöst. Zu dieser Lösung wurde unter Beschallung in einem mit 70°C warmem Wasser aufgefüllten Ultraschallbad 151 g Eisenpulver mit einer mittleren Korngröße von 4,1 µm in Portionen zugegeben. Die flüssige Suspension (Gehalt an versinterbarem Pulver 57,8 Vol.-%, teilkristallinem Polymer 19,9 Vol.-%, Lösungsmittel 22,3 Vol.-%; eine Lösung von 47,2 Vol.-% des teilkristallinen Polymeren in Butylacetat) zeigte eine Verfestigungstemperatur von 55°C. Die 70°C warme Suspension wurde in ein mit Polytetrafluorethylen beschichtetes, teilbares Becherglas eingegossen und innerhalb einer Stunde auf 20°C abgekühlt. Das entstandene, harte Formteil ließ sich leicht aus dem Glas entfernen und wurde, wie in Beispiel 1 beschrieben, getrocknet, vom teilkristallinen Polymer befreit und zu einem rißfreien Sinterformteil verarbeitet.

### Beispiel 7

In einer Rührwerkskugelmühle wurde eine Suspension, bestehend aus 363 g ZrO₂, stabilisiert mit 5,2 Gew.-% Y₂O₃ und mit einer mittleren Korngröße von 0,3 µm, 3,7 g einer modifizierten Polyhydroxystearinsäure als Dispergator und 180 ml Butylacetat 1 h lang bei 3 000 U/min gemahlen. Die Mahlkugeln wurden abgetrennt und die Suspension wurde am Rotationsverdampfer eingeengt und zu einem Granulat verarbeitet.

Es wurde ein teilkristallines, endgruppenverschlossenes Polyethylenoxid hergestellt:
30 g Polyethylenoxid mit einer mittleren Molmasse von 9 000 wurde mit 1 g Essigsäureanhydrid und 0,25 g Natriumacetat versetzt und auf 130°C erhitzt und da eine halbe Stunde belassen. Essigsäure und Essigsäureanhydrid wurden bei Wasserstrahlpumpenvakuum abdestilliert. Das so erhaltene endgruppenverschlossene Polyethylenoxid hatte ein Schmelzbereich von 60 - 65°C; die Kristallinität nach DSC war 80 %. (Schmelzwärme 178 J/g).

In einem Glaskolben wurde 5,8 g des teilkristallinen Polyethylenoxid bei 60°C in 60°C in 60 ml Butylacetat gelöst. Zu dieser Lösung wurde unter Beschallung in einem mit 60°C warmen Wasser aufgefüllten Ultraschallbad 300 g des mit Dispergator beschichteten ZrO₂-Pulvergranulates in Portionen zugegeben. Die dünnflüssige Suspension (Gehalt an versinterbarem Pulver 41,9 Vol.-%, teilkristallinen Polymer 4,1 Vol.-%, Dispergator 2,8 Vol.-%, Lösungsmittel 51,2 Vol.-%; eine Lösung von 7,5 Vol.-% des teilkristallinen Polymeren in Butylacetat) zeigte eine Verfestigungstemperatur von 28°C. Die 60°C warme Suspension wurde in ein mit Polytetrafluorethylen beschichtetes, in zwei Hälften teilbares Becherglas eingegossen und innerhalb einer Stunde auf -18°C abgekühlt. Das erhaltene, harte Formteil mit 50 mm Durchmesser und 30 mm Höhe ließ sich aus dem Becherglas entfernen. Das Formteil wurde im Vakuum bei bis auf 1 mbar fallendem Druck jeweils eine Stunde bei 0°C, 5⁰C, 10°C und 20°C getrocknet. Anschließend wurde das Formteil, wie in Beispiel 6 beschrieben, vom teilkristallinen Polyethylenoxid und vom Dispergator befreit. Dann wurde mit 10°C/min auf 1000°C aufgeheizt und mit 2°C/min auf 1500°C erhitzt und da 2 h lang belassen. Der erhaltene Sinterformteil war rißfrei und hatte eine Dichte von 6,01 g/cm³.

### Beispiel 8

In einem Glaskolben wurde in einem Lösungsmittelgemisch, bestehend aus 28,72 g Ethylenglykol und 8,62 g Wasser, 2,8 g des Dispergierhilfsmittels Polyacrylsäure-Tetrabutylammoniumsalz (Molmasse zwischen 3000 und 7000) gelöst. Zu dieser Lösung wurde unter Beschallung in einem mit 30°C warmem Wasser aufgefüllten Ultraschallbad 186,65 g Al₂O₃ in Portionen gegeben. Danach wurde die Suspension auf 100°C aufgheizt, und es wurden 12,31 g eines niedermolekularen, teilkristallinen Copolyamids (70 Teile Polyamid-6, 30 Teile Polyamid-6,6 Mₙ ca. 2500, Schmelzpunkt ca. 150°C, Kristallinität ca. 25 %, Schmelzwärme ca. 48 J/g) langsam zugesetzt. Die dünnflüssige Suspension (Gehalt an versinterbarem Pulver 49,15 Vol.-%, teilkristallinen Polymer 11,44 Vol.-%, Dispergator 3,27 Vol.-%, Lösungsmittel 36,14 Vol.-%) wurde in ein mit Polytetrafluorethylen beschichtetes teilbares Becherglas eingegossen und auf 6°C abgekühlt. Das entstandene Formteil ließ sich leicht aus dem Becherglas entfernen und wurde im Vakuum bei bis auf 1 mbar fallendem Druck jeweils eine Stunde bei 10°C, 20°C, 30°C und 40°C getrocknet. Das Formteil war rißfrei und wurde, wie in Beispiel 4B beschrieben, zur Entfernung des Dispergators und des teilkristallinen Polymers einem Pyrolyseprogramm und anschließend einem Sinterprogramm unterworfen. Das Sinterformteil war rißfrei und hatte eine Dichte von 3,85 g/cm³.

## Patentansprüche

1. Vergießbare Formmassen für die Herstellung von Formkörpern, enthaltend, bezogen auf die Gesamtmasse,
A) 30 - 70 Vol.-% eines versinterbaren Pulvers,
B) 1 - 55 Vol.-% eines kristallinen oder teilkristallinen Polymeres oder Copolymers mit einer Kristallinität von mindestens 10 % und einem Molekulargewicht von bis zu 200 000 und
C) 10 - 55 Vol.-% eines Lösungsmittels für das Polymere oder Copolymere,
wobei Formmassen, die Polyethylenhomopolymere und ein Mineralöl enthalten, ausgenommen sind.

2. Vergießbare Formmassen nach Anspruch 1, dadurch gekennzeichnet, daß sie die Komponenten in folgenden Mengen enthalten:
| | |
|---|---|
| Komponente A: | 40 - 65 Vol.-% |
| Komponente B: | 10 - 35 Vol.-% |
| Komponente C: | 20 - 35 Vol.-%. |

3. Vergießbare Formmassen nach Anspruch 1, dadurch gekennzeichnet, daß sie zusätzlich bis zu 10 Vol.-% eines Dispergierhilfsmittels enthalten.

4. Vergießbare Formmassen nach Anspruch 1, dadurch gekennzeichnet, daß das versinterbare Pulver eine Korngröße zwischen 0,1 und 50 µm aufweist.

5. Vergießbare Formmassen nach Anspruch 1, dadurch gekennzeichnet, daß das versinterbare Pulver ein oxidisches Keramikpulver, ein nicht oxidisches Keramikpulver und/oder ein Metallpulver ist.

6. Vergießbare Formmassen nach Anspruch 1, dadurch gekennzeichnet, daß in Komponente B Polyethylen als Block enthalten ist.

7. Vergießbare Formmassen nach Anspruch 1, dadurch gekennzeichnet, daß sie als Komponente C ein unpolares Lösungsmittel mit einem Schmelzpunkt unter -40°C oder ein polares Lösungsmittel enthalten.

8. Vergießbare Formmassen nach Anspruch 1, dadurch gekennzeichnet, daß in Komponente B isotaktisches Polystyrol, syndiotaktisches Polystyrol, isotaktisches Polypropylen, Polyoxymethylen, Polyethylenoxid, Polypropylenoxid, Polyamid-6 oder Polyamid-6,6 oder ein statistisches Copolymer aus Polyamid-6 und Polyamid-6,6 mit Molverhältnissen PA 6 : PA 6,6 von 99 : 1 bis 1 : 99 zumindest als Block enthalten ist.

9. Verfahren zur Herstellung eines Formkörpers unter Verwendung einer Formmasse nach Anspruch 1, dadurch gekennzeichnet, daß man die Formmasse oberhalb ihrer Verfestigungstemperatur verformt, anschließend auf Temperaturen unterhalb ihrer Verfestigungstemperatur abkühlt und aus dem erhaltenen Formkörper das Lösungsmittel unterhalb der Verfestigungstemperatur entfernt.

10. Verfahren nach Anspruch 9, dadurch gekennzeichnet, daß man das Lösungsmittel aus dem erhaltenen Formkörper unterhalb der Verfestigungstemperatur bei Unterdruck verdampft.

11. Verfahren zur Herstellung eines Sinterkörpers aus einem nach Anspruch 9 hergestellten Formkörper, dadurch gekennzeichnet, daß man nach der Entfernung des Lösungsmittels das teilkristalline Polymer oder Copolymer und gegebenenfalls den Dispergator bei 150°C bis 600°C entfernt und anschließend den Formkörper bei der für das versinterbare Pulver erforderlichen Temperatur sintert.

## Claims

1. Moldable materials for manufacturing molded articles, comprising, based on the total material,
A) 30 - 70% by volume of a sinterable powder,
B) 1 - 55% by volume of a wholly or partly crystalline homo- or copolymer having a crystallinity of at least 10% and a molecular weight of up to 200 000, and
C) 10 - 55% by volume of a solvent for the homo- or copolymer,
provided that moldable materials that contain polyethylene homopolymers and a mineral oil shall be excluded.

2. Moldable materials as claimed in claim 1, containing the components in the following amounts:
| | |
|---|---|
| Component A: | 40 - 65% by volume |
| Component B: | 10 - 35% by volume |
| Component C: | 20 - 35% by volume. |

3. Moldable materials as claimed in claim 1, additionally containing up to 10% by volume of a dispersing aid.

4. Moldable materials as claimed in claim 1, wherein the sinterable powder has a particle size of from 0.1 to 50 µm.

5. Moldable materials as claimed in claim 1, wherein the sinterable powder is an oxidic ceramic powder, a nonoxidic ceramic powder and/or a metal powder.

6. Moldable materials as claimed in claim 1, wherein component B contains polyethylene as a block.

7. Moldable materials as claimed in claim 1, containing as component C an apolar solvent having a melting point below -40°C or a polar solvent.

8. Moldable materials as claimed in claim 1, wherein component B comprises isotactic polystyrene, syndiotactic polystyrene, isotactic polypropylene, polyoxymethylene, polyethylene oxide, polypropylene oxide, nylon-6 or nylon-6,6 or a random copolymer of nylon-6 and nylon-6,6 with a molar ratio of PA 6:PA 6,6 of from 99:1 to 1:99 at least as a block.

9. A process for manufacturing a molded article using a moldable material as claimed in claim 1, which comprises molding the moldable material above its solidification temperature, then cooling to temperatures below its solidification temperature and removing from the resulting molded article the solvent below the solidification temperature.

10. A process as claimed in claim 9, wherein the solvent is removed from the resulting molded article below the solidification temperature by evaporation under reduced pressure.

11. A process for manufacturing a sintered article from a molded article manufactured as claimed in claim 9, which comprises, after removal of the solvent, removing the partly crystalline homo- or copolymer and, if used, the dispersant at from 150°C to 600°C and then sintering the molded article at the temperature required for the sinterable powder.

## Revendications

1. Masses à mouler coulables pour la fabrication de corps moulés, contenant, par rapport à la masse totale,
A) 30 - 70% en volume d'une poudre frittable,
B) 1 - 55% en volume d'un polymère ou copolymère cristallin ou partiellement cristallin, ayant une cristallinité d'au moins 10% et un poids moléculaire pouvant aller jusqu'à 200 000 et
C) 10 - 55% en volume d'un solvant pour le polymère ou le copolymère,
à l'exclusion de masses à mouler qui contiennent des homopolymères d'éthylène et une huile minérale.

2. Masses à mouler coulables selon la revendication 1, caractérisées en ce qu'elles contiennent leurs composants dans les proportions suivantes:
| | |
|---|---|
| Composant A: | 40 - 65% en volume |
| Composant B: | 10 - 35% en volume |
| Composant C: | 20 - 35% en volume. |

3. Masses à mouler coulables selon la revendication 1, caractérisées en ce qu'elles contiennent en plus Jusqu'à 10% en volume d'un agent auxiliaire dispersant.

4. Masses à mouler coulables selon la revendication 1, caractérisées en ce que la poudre frittable présente une grosseur de grains comprise entre 0,1 et 50 µm.

5. Masses à mouler coulables selon la revendication 1, caractérisées en ce que la poudre frittable est une poudre céramique de type oxyde, une poudre céramique de type autre qu'un oxyde et/ou une poudre métallique.

6. Masses à mouler coulables selon la revendication 1, caractérisées en ce que du polyéthyléne est contenu dans le composant B en tant que bloc.

7. Masses à mouler coulables selon la revendication 1, caractérisées en ce qu'elles contiennent, en tant que composant C, un solvant non polaire ayant un point de fusion inférieur à -40°C ou un solvant polaire.

8. Masses à mouler coulables selon la revendication 1, caractérisées en ce qu'il est contenu au moins en tant que bloc, dans le composant B, du polystyrène isotactique, du polystyrène syndiotactique, du polypropylène isotactique, du polyoxyméthylène du polyoxyde d'éthylène, du polyoxyde de propylène, du polyamide-6, du polyamide-6,6 ou un copolymère statistique de polyamide-6 et de polyamide-6,6 dans des rapports molaires PA-6 : PA-6,6 de 99 : 1 à 1 : 99.

9. Procédé de fabrication d'un corps moulé avec utilisation d'une masse à mouler selon la revendication 1, caractérisé en ce que l'on moule la masse à mouler au-dessus de sa température de solidification, puis on la refroidit à des températures inférieures à sa température de solidification et on élimine le solvant du corps moulé ainsi obtenu, à une température inférieure à la température de solidification.

10. Procédé selon la revendication 9, caractérisé en ce qu'on élimine le solvant du corps moulé obtenu, à une température inférieure à la température de solidification, par évaporation sous pression réduite.

11. Procédé de fabrication d'un corps fritté à partir d'un corps moulé fabriqué selon la revendication 9, caractérisé en ce qu'après l'élimination du solvant, on élimine le polymère ou le copolymère partiellement cristallin et éventuellement l'agent dispersant à une température de 150 à 600°C, puis on fritte le corps moulé à la température nécessaire pour la poudre frittable.
